**Europäisches Patentamt**

**European Patent Office**

**Office européen des brevets**

(19)

(11) Veröffentlichungsnummer: **0 151 946**

**A1**

# (12) EUROPÄISCHE PATENTANMELDUNG

(21) Anmeldenummer: 85100401.0

(22) Anmeldetag: 16.01.85

(51) Int. Cl.⁴: **F 16 H 47/04**
**H 02 K 7/18**

(30) Priorität: 23.01.84 CH 278/84

(43) Veröffentlichungstag der Anmeldung:
21.08.85 Patentblatt 85/34

(84) Benannte Vertragsstaaten:
AT BE CH DE FR GB IT LI LU NL SE

(71) Anmelder: Schweizerische Lokomotiv- und
Maschinenfabrik

CH-8401 Winterhur(CH)

(72) Erfinder: Meier, Bruno
Im Geissacker 10
CH-8404 Winterthur(CH)

(74) Vertreter: Dipl.-Ing. H. Marsch Dipl.-Ing. K. Sparing
Dipl.-Phys.Dr. W.H. Röhl Patentanwälte
Rethelstrasse 123
D-4000 Düsseldorf(DE)

(54) Antriebseinrichtung mit variabler Gesamtübersetzung, insbesondere zum Antrieb eines Generators von einem Dieselmotor aus.

(57) Eine Antriebseinrichtung mit variabler Gesamtübersetzung, insbesondere zum Antrieb eines Generators von einem Dieselmotor aus. Diese weist ein Ueberlagerungsgetriebe mit einem Leistungspfad mit konstanter Uebersetzung (10, 38, 12) und einem Leistungspfad mit variabler Uebersetzung auf (32, 30, 26, 28), wobei ein die Leistungen der genannten Leistungspfade zusammenführendes oder aufteilendes Umlaufgetriebe (14) vorgesehen ist. Dabei weist das Ueberlagerungsgetriebe als Leistungspfad mit variabler Uebersetzung ein Hydrostatikgetriebe mit zwei Pump/Motor-Einheiten (32, 26) auf. Zwischen den Pump/Motor-Einheiten (32, 26) ist wenigstens ein Druckspeicher (44, 46, 60, 68) für Hydraulikflüssigkeit zu- bzw. abschaltbar.

EP 0 151 946 A1

./...

_Fig. 1_

P.5859/N1Bs

Schweizerische Lokomotiv- und Maschinenfabrik (Schweiz)

Antriebseinrichtung mit variabler Gesamtübersetzung, insbesondere zum Antrieb eines Generators von einem Dieselmotor aus

Die Erfindung betrifft eine Antriebseinrichtung mit variabler Gesamtübersetzung, insbesondere zum Antrieb eines Generators von einem Dieselmotor aus, welche ein Ueberlagerungsgetriebe mit einem Leistungspfad mit konstanter Uebersetzung und einem Leistungspfad mit variabler Uebersetzung aufweist, wobei ein die Leistungen der genannten Leistungspfade zusammenführendes oder aufteilendes Umlaufgetriebe vorgesehen ist, und das Ueberlagerungsgetriebe als Leistungspfad mit variabler Uebersetzung ein Hydrostatikgetriebe mit zwei Pump/Motor-Einheiten aufweist.

Eine solche Antriebseinrichtung ist z.B. im Artikel "Ueberlagerungsantriebe" von Prof. Dr. Jean Thoma in der Zeitschrift Oelhydraulik und Pneumatik 15 (1971) Nr. 3, Seite 123, offenbart. Bei der Stromerzeugung z.B. von einem Schiffsdieselmotor aus, welcher auf der einen Seite den Propeller antreibt, wird ein solches Ueberlagerungsgetriebe auf der anderen Seite zwischen dem Dieselmotor und z.B. einem Wechselstromgenerator geschaltet, der seinen Strom an das Bordnetz abgibt.

Da der Dieselmotor eine ungleichförmige Drehbewegung erzeugt, der Generator hingegen möglichst gleichmässige Drehzahl aufweisen muss, ist zwischen Dieselmotor und Ueberlagerungsgetriebe üblicherweise eine hochelastische Schaltkupplung vorgesehen. Die ganze Antriebseinrichtung stellt damit ein Schwingungsgebilde dar, das mit entsprechenden Eigenfrequenzen behaftet ist.

Dieser Stand der Technik weist jedoch den Nachteil auf, dass die genannten Schwingungseigenschaften bzw. Eigenfrequenzen jeweils nur bei ganz bestimmten Betriebsbedingungen optimal sind, während in der Praxis die Betriebsbedingungen in weiten Grenzen variieren können. Wenn der Generator z.B. einziger Stromerzeuger ist und über seine Drehzahl direkt die Frequenz des Netzes bestimmt (Inselbetrieb), sind die Betriebsverhältnisse anders, als wenn er parallel zusammen mit anderen Generatoren ein gemeinsames Netz speisen muss (Parallelbetrieb). Weiter kann sich das Schwingungsverhalten ändern je nach der Drehzahlcharakteristik des Dieselmotors und damit verbundener Resonanzen.

Aufgabe der Erfindung ist es, die eingangs genannte Antriebseinrichtung so zu verbessern, dass diese auch bei sehr verschiedenen Betriebsbedingungen optimale Schwingungseigenschaften aufweist.

Zur Lösung dieser Aufgabe dient die Massnahme, dass zwischen den Pump/Motor-Einheiten wenigstens ein Druckspeicher für Hydraulikflüssigkeit zu- bzw. abschaltbar ist.

Hierdurch lässt sich erreichen, dass die Kompressibilität der energieübertragenden Hydraulikflüssigkeit zwischen den Pump/Motor-Einheiten erhöht wird, womit die Drehelastizität der Antriebseinrichtung erhöht wird. Dabei kann durch Wahl der Grösse bzw. Anzahl der Druckspeicher die Drehelastizität der Antriebseinrichtung in weiten Grenzen variiert werden. So kann z.B. durch Wahl einer kurzen Druckleitung zwischen den Pump/Motor-Einheiten und Abschaltung
der Druckspeicher eine minimale Drehelastizität erhalten
werden, falls der Antriebsmotor nur geringe Drehzahlschwankungen aufweist und der Generator z.B. im Inselbetrieb als
alleiniger Stromerzeuger arbeitet. In diesem Fall kann die
frequenzbestimmende Drehzahl allein über das Ueberlagerungsgetriebe konstant gehalten werden.

Muss hingegen der Generator gegen ein weitgehend starres
Netz arbeiten, wird seine Drehzahl vom Netz her als praktisch konstant erzwungen, während der Dieselmotor starke
Drehzahlschwankungen aufweist. In diesem Fall ist eine
grössere Drehelastizität des Antriebes vorteilhaft, was
durch Zuschalten einer oder mehrerer Druckspeicher erreicht wird.

Ebenso lassen sich durch Anpassen der Drehelastizität allfällige Resonanzschwingungen bei bestimmten Drehzahlen des
Dieselmotors infolge Verlagern der Eigenfrequenzen vermeiden.

Nach einer besonders vorteilhaften Ausführung der Erfindung können wenigstens zwei Druckspeicher verschiedenen
Volumens parallel zu- bzw. abschaltbar sein. Hierdurch
können bereits bei zwei ungleichen Volumina drei Volumenkombinationen und somit entsprechende Elastizitätsstufen
erreicht werden.

Als Druckspeicher kann insbesondere ein federbelasteter
Kolbenspeicher vorgesehen sein. Hierdurch kann eine besonders grosse Zusatzelastizität beim Zu- bzw. Abschalten
erreicht werden.

- 4 -

In der Verbindungsleitung zum Druckspeicher kann eine Drosselstelle vorgesehen sein. Hierdurch lassen sich insbesondere die durch Veränderung der Elastizität allfällig auftretenden zusätzlichen Schwingungen dämpfen.

Dabei kann die Drosselstelle veränderbaren Durchlass aufweisen. Hierdurch lässt sich der Durchströmwiderstandsfaktor ändern, womit eine weitgehend beliebig definierbare Dämpfung erzielt wird, und somit das dynamische Verhalten der Antriebseinrichtung entsprechend beeinflusst werden kann.

Es können auch Mittel zur Zuschaltung wenigstens eines Druckspeichers während des Betriebes der Antriebseinrichtung in Abhängigkeit des Betriebszustandes derselben vorgesehen sein. Hierdurch lässt sich die Elastizität bzw. Dynamik der Antriebseinrichtung fortwährend optimal anpassen.

Zur Feststellung des Betriebszustandes kann dabei ein Drehzahlfühler vorgesehen sein. Dies ist besonders vorteilhaft zur Vermeidung von Resonanzschwingungen bei bekannten Drehzahlbereichen.

Schliesslich kann zur Feststellung des Betriebszustandes auch ein Schwingungsfühler vorgesehen sein. Dies ist insbesondere von Vorteil im Falle von unvorhergesehen auftretenden Schwingungen.

Die nähere Erläuterung der Erfindung erfolgt anhand von Ausführungsbeispielen in Verbindung mit nachstehender Zeichnung. Es zeigen:

Fig. 1    eine erste Ausführungsform der erfindungsgemässen Antriebseinrichtung und

Fig. 2    eine zweite Ausführungsform der Antriebseinrichtung, dargestellt als Ausschnitt anhand Fig. 1.

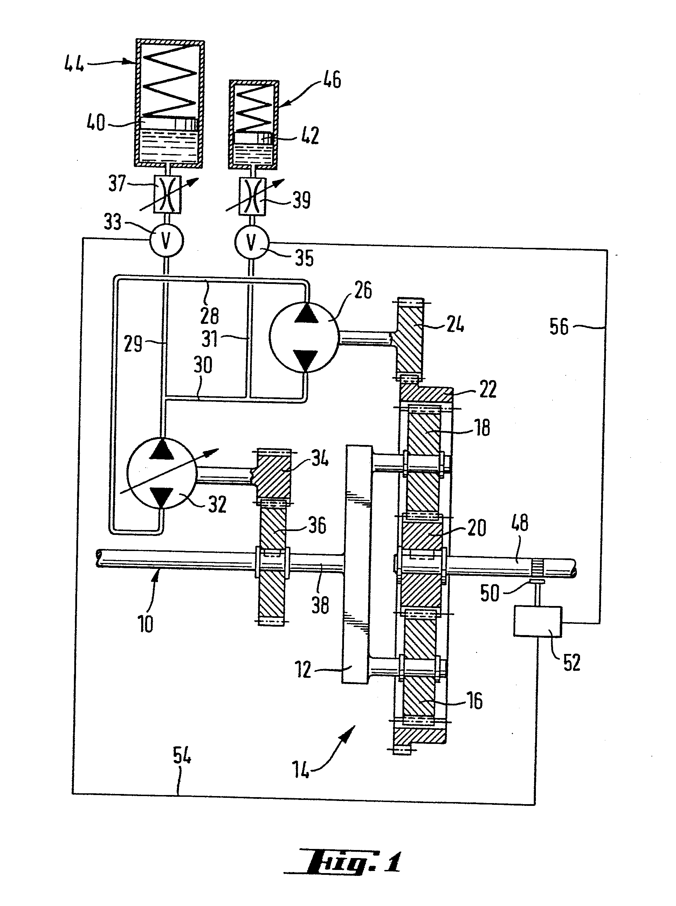

Eine z.B. mit einem Schiffsdieselmotor verbundene Hauptwelle 10 (Fig. 1) ist mit dem Steg 12 eines Umlaufgetriebes 14 verbunden, mit Planetenrädern 16, 18, welche einerseits mit einem Sonnenrad 20 und anderseits mit ein
Hohlrad 22 im Eingriff stehen. Dieses steht über einen
Ritzel 24 mit einer fixen, somit konstante Durchflussmenge aufweisenden hydrostatischen Pump/Motor-Einheit 26 in
Verbindung, welche einerseits über die Oelleitungen 28,
30 mit einer Pump/Motor-Einheit 32, deren Durchflussmenge
verstellbar ist, in Verbindung steht. Die verstellbare
Pump/Motor-Einheit 32 steht über die Zahnräder 34, 36
mit der Hauptwelle 10 in Verbindung.

Der bisher beschriebene Teil der Antriebseinrichtung stellt
ein Ueberlagerungsgetriebe bekannter Art dar, wobei der
zwischen dem Ritzel 36 und dem Steg 12 befindliche Teil
38 der Hauptwelle zusammen mit dem Steg 12 den Leistungspfad mit konstanter Uebersetzung bildet, während das Hydrostatikgetriebe 32, 26, 28, 30 den Leistungspfad mit
variabler Uebersetzung bildet.

Zwischen den Pump/Motor-Einheiten 26, 32 sind über Leitungen 29, 31 Ventile 33, 35 und veränderbare Drosselstellen 37, 39 zwei federbelastete Kolben 40, 42 aufweisende
Druckspeicher 44, 46 angeordnet. An der Abtriebswelle 48,
welche mit dem Sonnenrad 20 des Umlaufgetriebes 14 gekoppelt ist, befindet sich ein Schwingungsfühler 50, welcher
über eine Steuereinrichtung 52 und Signalleitungen 54, 56
mit den Ventilen 33 bzw. 35 verbunden ist.

Für ein Betriebsbeispiel der beschriebenen Vorrichtung
wird angenommen, dass mit der Hauptwelle 10 ein Schiffsdieselmotor verbunden ist, dessen Drehzahl in bestimmten Grenzen schwankt und dass mit der Abtriebswelle 48 ein Generator verbunden ist, dessen Drehzahl konstant gehalten werden soll. Das Drehzahlverhältnis des Leistungspfades mit variabler Uebersetzung, d.h. verstellbare Pump/Motor-Einheit 32 und die Fixe/Pump-Motor-Einheit 26, ist normalerweise regelbar zwischen -1 und +1. Die Antriebsleistung gelangt über die Hauptwelle 10 in das Getriebe. Ein Teil dieser Leistung wird zum Steg 12 des Planetengetriebes 14 geleitet, während ein anderer Teil der Leistung über die Zahnräder 36, 34 zu der Pump/Motor-Einheit 32 geführt wird. In dieser Pump/Motor-Einheit wird z.B. ein Druckoelstrom erzeugt, der über die Leitung 30 zu der Pump/Motor-Einheit 26 geführt wird um nachher wieder drucklos über die Leitung 28 zur Pump/Motor-Einheit 32 zurückgeführt zu werden. Die Pump/Motor-Einheit 26 läuft dann mit einer veränderlichen Drehzahl je nach der Stellung der Pump/Motor-Einheit 32. Die Drehzahl der Pump/Motor-Einheit 26 wird über das Ritzel 24 zum Hohlrad 22 des Planetengetriebes 14 geführt. Aus der Drehzahl des Hohlrades 22 und des Stegs 12 wird in diesem Planetengetriebe 14 eine resultierende Drehzahl gebildet, die über die Welle 48 zum Generator weitergeleitet wird. Der bekannte Vorteil dieser Anordnung besteht darin, dass nur ein relativ kleiner Teil der zu übertragenden Leistung über den Zweig mit dem eigentlichen Regelgetriebe (Hydrostatikgetriebe) geführt werden muss, womit die Verluste der Antriebseinrichtung auf einem kleinen Wert gehalten werden können.

Das beschriebene Ueberlagerungsgetriebe besitzt eine bestimmte Drehelastizität, vorwiegend bedingt durch die Kompressibilität des energieübertragenden Druckoels in der Leitung 30. Erfindungsgemäss kann nun diese Elastizität während des Betriebes beim Auftreten von unerwünschten Schwingungen erhöht bzw. gesenkt werden durch Zu- bzw. Abschalten einer oder beider Druckspeicher 44, 46 in dem die Ventile 33, 35 nach Massgabe des Schwingungsfühlers 50 über die Signalleitungen 54, 56 betätigt werden.

Da die Verängerung der Elastizität selber wiederum zu Schwingungsvorgängen Anlass geben kann, wird durch Zwischenschalten der Drosselstellen 37, 39, die den Durchströmwiderstandsfaktor verändern, eine weitgehend beliebig definierbare Dämpfung verwirklicht, was für das dynamische Verhalten der Antriebseinrichtung wesentlich ist.

Durch die Grösse der Druckspeicher wird die Elastizität des Getriebes bestimmt. Damit ist es bei Bedarf auch möglich, durch Parallelschalten verschieden grosser Speicher mehrere Stufen zu erhalten. Dabei ergeben z.B. zwei Volumina mit Werten 1 und 2 drei Kombinationen 1, 2, 3 (arithmetisch gestuft). Drei Volumina mit den Werten 1, 2 und 4 ergeben sieben Kombinationen 1, 2, 3, 4, 5, 6, 7 (arithmetisch gestuft). Es können auch geometrische Abstufungen vorgenommen werden, wobei z.B. drei Volumina mit den Werten 1; 1,325; 1,755 sechs Kombinationen 1; 1,325; 1,755; 2, 325; 3,08; 4,08 ergeben. Jede Elastizitätsstufe kann dabei mit einem eigenen Dämpfungswert versehen werden.

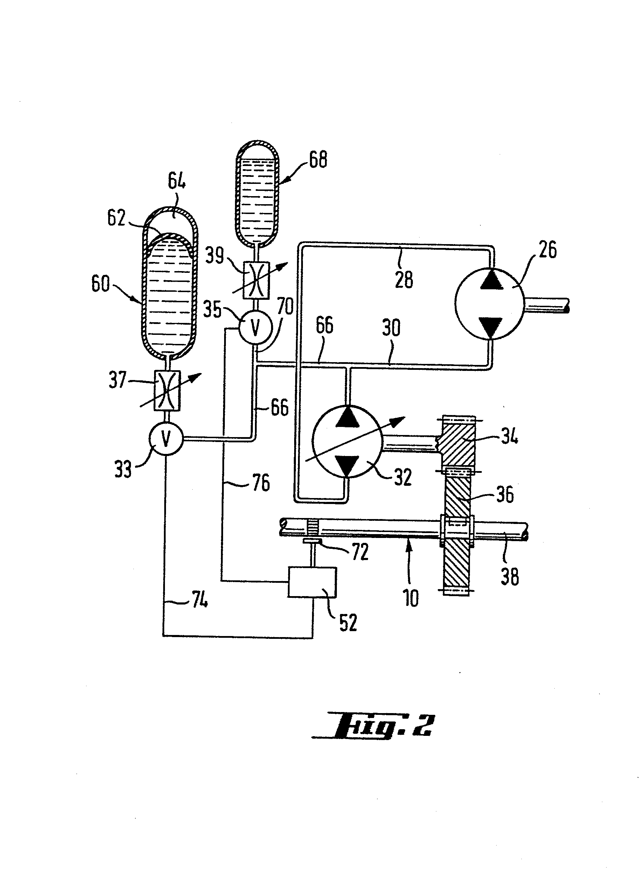

Beim Ausführungsbeispiel nach Fig. 2 ist statt des Federdruckspeichers 44 ein Druckspeicher 60 mit einer elastischen Membran 62 und einem Gasraum 64 über eine Leitung 66 mit der Leitung 30 verbunden. Statt des Federdruckspeichers 46 ist ein gefüllter Flüssigkeitsspeicher 68 über die Leitung 70 mit der Leitung 66 verbunden. In diesem Speicher wird die Elastizität erreicht durch die Kompres-

- 8 -

sibilität der Hydraulikflüssigkeit selbst, z.B. ca. 1 %
Volumenänderung bei einer Druckänderung von 150 bar.

Statt des Schwingungsfühlers 50 ist in diesem Fall ein
an der Hauptwelle 10 angebrachter Drehzahlfühler 72 über
Signalleitungen 74, 76 mit den Ventilen 33, 35 verbunden.

Für ein Betriebsbeispiel der zuletzt beschriebenen Vorrichtung wird angenommen, dass an der Hauptwelle 10 resonanzgefährdete Drehzahlbereiche festgestellt werden. Je
nach Drehzahlbereich wird der Speicher 60 oder 68 oder
auch beide zusammen über das Steuergerät 52 eingeschaltet,
womit die Resonanzbereiche verschoben und die optimalen
Betriebseigenschaften der Antriebseinrichtung wieder hergestellt werden.

Es versteht sich, dass bei Antrieben, bei denen die Kraftflussrichtung wechseln kann, die entsprechenden Druckspeicher in beide Druckoelstränge des Hydrostatikgetriebes eingebaut werden können.

Es versteht sich ferner, dass die Drehzahl- und Schwingungsfühler auch miteinander kombiniert werden können.

Patentansprüche
————————————

1. Antriebseinrichtung mit variabler Gesamtübersetzung, insbesondere zum Antrieb eines Generators von einem Dieselmotor aus, welche ein Ueberlagerungsgetriebe mit einem Leistungspfad mit konstanter Uebersetzung und einem Leistungspfad mit variabler Uebersetzung aufweist, wobei ein die Leistungen der genannten Leistungspfade zusammenführendes oder aufteilendes Umlaufgetriebe vorgesehen ist, und das Ueberlagerungsgetriebe als Leistungspfad mit variabler Uebersetzung ein Hydrostatikgetriebe mit zwei Pump/Motor-Einheiten aufweist, dadurch g e k e n n - z e i c h n e t , dass zwischen den Pump/Motor-Einheiten (32, 26) wenigstens ein Druckspeicher (44, 46, 60, 68) für Hydraulikflüssigkeit zu- bzw. abschaltbar ist.

2. Antriebseinrichtung nach Anspruch 1, dadurch gekennzeichnet, dass wenigstens zwei Druckspeicher verschiedener Grösse (44, 46; 60, 68) parallel zu- bzw. abschaltbar sind.

3. Antriebseinrichtung nach Anspruch 1, dadurch gekennzeichnet, dass als Druckspeicher (44, 46) ein federbelasteter Kolbenspeicher vorgesehen ist.

4. Antriebseinrichtung nach Anspruch 1, dadurch gekennzeichnet, dass in der Verbindungsleitung zum Druckspeicher (44, 46, 60, 68) eine Drosselstelle (37, 39) vorgesehen ist.

5. Antriebseinrichtung nach Anspruch 4, dadurch gekennzeichnet, dass die Drosselstelle (37, 39) veränderbaren Durchlass aufweist.

6. Antriebseinrichtung nach Anspruch 1, gekennzeichnet durch Mittel (33, 35, 50, 52, 72) zur Zu- bzw. Abschaltung wenigstens eines Druckspeichers (44, 46, 60, 68) während des Betriebes der Antriebseinrichtung in Abhängigkeit des Betriebszustandes derselben.

7. Antriebseinrichtung nach Anspruch 6, dadurch gekennzeichnet, dass zur Feststellung des Betriebszustandes ein Drehzahlfühler (72) vorgesehen ist.

8. Antriebseirnichtung nach Anspruch 6, dadurch gekennzeichnet, dass zur Feststellung des Betriebszustandes ein Schwingungsfühler (50) vorgesehen ist.

**Fig. 1**

**Fig. 2**

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | FR-A-2 520 827 (LE MOTEUR)<br>* Seiten 1-11; Figuren *<br>--- | 1,4-6 | F 16 H 47/04<br>H 02 K 7/18 |
| X | FR-A-2 419 436 (M A.N.)<br><br>* Seiten 5-10; Figuren *<br>--- | 1,2,4,<br>6,7 | |
| X | FR-A-2 467 095 (M.A.N.)<br><br>* Seiten 3-6; Figuren *<br>--- | 1,2,4,<br>6,7 | |
| A | US-A-4 163 412 (PORTER)<br>* Spalten 3,4; Figuren *<br><br>----- | 1,8 | |

| RECHERCHIERTE SACHGEBIETE (Int. Cl.4) |
|---|
| F 16 H 47/00<br>F 15 B 1/00<br>H 02 K 7/00<br>B 60 T 1/10 |

Der vorliegende Recherchenbericht wurde für alle Patentansprüche erstellt.

| Recherchenort<br>DEN HAAG | Abschlußdatum der Recherche<br>29-03-1985 | Prüfer<br>FLORES E. |
|---|---|---|